**Europäisches Patentamt**

**European Patent Office**

**Office européen des brevets**

(19)

(11) Veröffentlichungsnummer: **0 065 803**
**B1**

(12) # EUROPÄISCHE PATENTSCHRIFT

(45) Veröffentlichungstag der Patentschrift:
17.09.86

(21) Anmeldenummer: **82200600.3**

(22) Anmeldetag: **17.05.82**

(51) Int. Cl.⁴: **G 01 N 23/02**

(54) **Streustrahlen-Untersuchungsanordnung.**

(30) Priorität: **23.05.81 DE 3120567**

(43) Veröffentlichungstag der Anmeldung:
**01.12.82 Patentblatt 82/48**

(45) Bekanntmachung des Hinweises auf die Patenterteilung:
**17.09.86 Patentblatt 86/38**

(84) Benannte Vertragsstaaten:
**DE FR GB NL SE**

(56) Entgegenhaltungen:
**DE - A - 2 312 507**
**DE - U - 7 541 605**
**FR - A - 2 386 055**
**US - A - 4 229 651**

**MESSTECHNIK, Band 78, Nr. 1, Januar 1970, Seiten 1-4,**
**G. KÄMPF et al.: "Automatisch arbeitendes**
**Simultan-Röntgendiffraktometer zur quantitativen**
**Bestimmung kristalliner Stoffgemische"**

(73) Patentinhaber: **Philips Patentverwaltung GmbH,**
**Billstrasse 80, D-2000 Hamburg 28 (DE)**

(84) Benannte Vertragsstaaten: **DE**

(73) Patentinhaber: **N.V. Philips' Gloeilampenfabrieken,**
**Groenewoudseweg 1, NL-5621 BA Eindhoven (NL)**

(84) Benannte Vertragsstaaten: **FR GB NL SE**

(72) Erfinder: **Strecker, Helmut, Heidrehmen 37,**
**D-2000 Hamburg 55 (DE)**

(74) Vertreter: **Hartmann, Heinrich, Dipl.-Ing. et al, Philips**
**Patentverwaltung GmbH**
**Billstrasse 80 Postfach 10 51 49,**
**D-2000 Hamburg 28 (DE)**

## Beschreibung

Die Erfindung betrifft eine Vorrichtung zur Abbildung von Streustrahlung aussendenden Streustrahlungsquellen eines mittels einer Primärstrahlung bestrahlten Körpers, mit einer ausserhalb der Primärstrahlung liegenden Blendenplatte, welche um eine senkrecht durch ihre Plattenebene verlaufende Achse drehbar ist und wenigstens eine ausserhalb der Drehachse liegende Blendenöffnung besitzt, und mit wenigstens einem Detektor bzw. einer Überlagerungseinrichtung zur Messung bzw. Überlagerung der bei unterschiedlichen Blendenöffnungspositionen durch die Blendenplatte hindurchtretenden Streustrahlung.

Eine derartige Vorrichtung ist bereits aus dem DE-U-7 541 605 bekannt. Mit ihrer Hilfe können ebene Schichtbilder des durchstrahlten Körpers erzeugt werden, indem zuerst die vom Körper ausgesandte und ausserhalb des Primärstrahls verlaufende Streustrahlung aus unterschiedlichen Perspektiven zur Aufnahme von Teilbildern des Körpers detektiert wird. Danach werden diese Teilbilder in einem weiteren Verarbeitungsschritt mittels einer Überlagerungseinrichtung derart überlagert, dass die gewünschten Schichtbilder des Körpers entstehen. Die Überlagerung der Teilbilder kann dabei z.B. mittels der zu ihrer Aufnahme eingesetzten Lochblendenplatte erfolgen.

Infolge der zusätzlichen Einrichtung zur Überlagerung der Teilbilder besitzt die genannte Vorrichtung einen relativ komplizierten Aufbau. Zudem ist der Kontrast der mit ihr erzeugten Schichtbilder unbefriedigend, da nicht nur Streustrahlung von der jeweils dargestellten Körperschicht, sondern auch von den dieser Körperschicht benachbarten Körperbereichen gemessen wird.

Aufgabe der Erfindung ist es, eine Streustrahlen-Untersuchungsvorrichtung zu schaffen, die gegenüber der bekannten Vorrichtung einen vereinfachten Aufbau besitzt und verbesserte Schichtbilder liefert.

Diese Aufgabe wird – ausgehend von der eingangs geschilderten Vorrichtung – gemäss der Erfindung dadurch gelöst, dass die Primärstrahlung zu einem ebenen Strahlenfächer ausgeblendet ist und die Blendenplatte parallel zum Strahlenfächer liegt, dass jeweils einer Blendenöffnung ein Detektor zugeordnet ist, der an der Drehung der Blendenplatte teilnimmt, und dass der mit seiner Eingangsfläche parallel zur Blendenplatte liegende Detektor um eine senkrecht zu seiner Eingangsfläche und durch ihr Zentrum verlaufende Detektorachse entgegen der Drehrichtung der Blendenplatte und mit gleicher Winkelgeschwindigkeit wie diese drehbar angeordnet ist.

Durch die zur Blendenplatte gegensinnige Drehung eines Detektors zur Aufnahme der von der durchstrahlten Körperebene gestreuten Strahlung wird erreicht, dass die Bilder der durchstrahlten Körperebene in einfacher Weise nacheinander praktisch deckungsgleich überlagert werden können. Besteht der Detektor beispielsweise aus einem strahlungsempfindlichen Film, so können die Bilder nacheinander auf diesen aufbelichtet werden. Der Detektor kann aber auch aus einem elektronischen Bildaufnehmer bestehen, so dass die nacheinander von ihm detektierten Bilder elektronisch überlagert und z.B. auf einem Monitor als Schichtbild dargestellt werden können.

Da durch die fächerförmig ausgeblendete Primärstrahlung nur die zu untersuchende Körperschicht durchstrahlt wird, und nicht noch weitere neben ihr liegende Körperbereiche, besitzen die mit dieser Vorrichtung erzeugten Schichtbilder einen relativ guten Kontrast. Dieser wird durch Streustrahlung, die aus der durchstrahlten Körperschicht benachbarten Körperbereichen kommt und durch Vielfachstreuung erzeugt wird, kaum vermindert, da die entsprechende Streustrahlung infolge der Drehung des Systems Blendenplatte – Detektor auf unterschiedliche Stellen der Detektoreingangsfläche trifft und infolgedessen im Schichtbild verschmiert wird. Durch die Drehung des Systems Blendenplatte – Detektor werden weiterhin Kontrastunterschiede im Schichtbild vermindert, die dadurch entstehen, dass die von verschiedenen Punkten der durchstrahlten Körperschicht ausgehende Streustrahlung unterschiedlich lange Wege im Körper zurücklegen muss.

Um die Qualität der Schichtbilder weiter zu erhöhen, kann die zu untersuchende Körperebene auch von mehreren fächerförmigen Strahlenbündeln, die den Körper z.B. ringförmig umgeben, durchstrahlt werden. Hierdurch wird erreicht, dass die Kontrastunterschiede im Schichtbild aufgrund der Schwächung der Primärstrahlung bei ihrem Verlauf durch den Körper wesentlich verringert werden.

Die erfindungsgemässe Vorrichtung eignet sich neben einer Anwendung im medizinischen Bereich insbesondere zur Anwendung auf dem Gebiet der zerstörungsfreien Materialprüfung. Hier wird, im Gegensatz zum medizinischen Bereich, eine hohe örtliche Auflösung gefordert, ohne dass Beschränkungen in der Höhe der Strahlendosis bestehen. Häufig ist hier auch die Anforderung an die Dichteauflösung gering. Bei einer Untersuchung von Lufteinschlüssen in Gussteilen kann man z.B. von einer binären Dichteverteilung ausgehen, so dass nur relativ grosse Dichtesprünge zu detektieren sind.

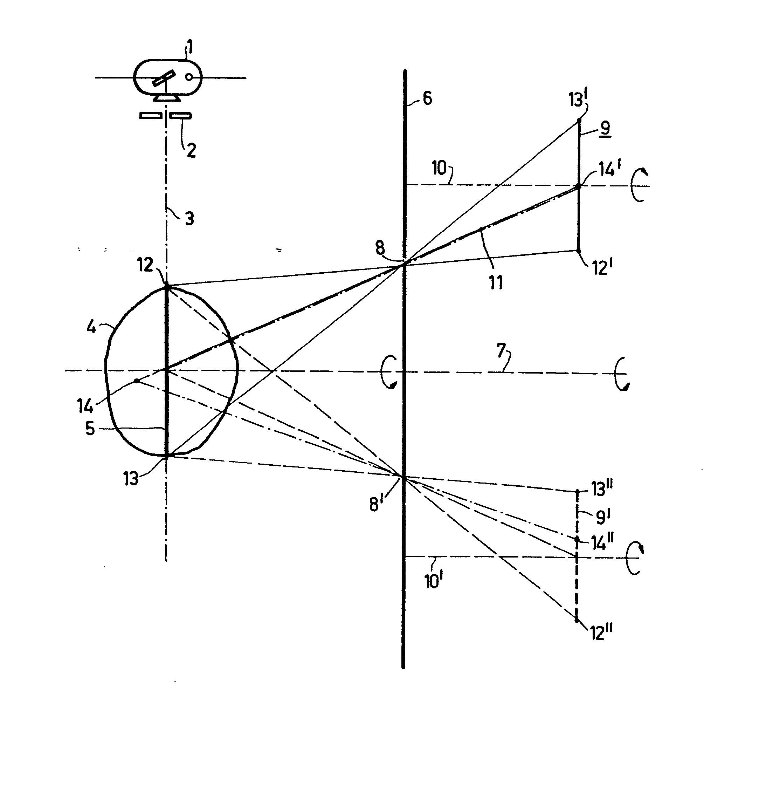

Die einzige Figur zeigt ein Ausführungsbeispiel der erfindungsgemässen Streustrahlen-Untersuchungsvorrichtung. Sie besitzt eine Röntgenröhre 1, deren Strahlung (Primärstrahlung) mittels einer Blende 2 zu einem ebenen, fächerförmigen Primärstrahlenbündel 3 ausgeblendet ist, dessen Ebene in der Figur senkrecht zur Zeichenebene verläuft. Das Primärstrahlenbündel 3, mit dem ein Körper 4 durchstrahlt wird, dient zur Festlegung einer Untersuchungsfläche 5 innerhalb dieses Körpers 4, wozu dieser relativ zum Primärstrahlenbündel 3 beliebig positionierbar ist.

Um die Strukturverteilung der durchstrahlten Körperebene bzw. Untersuchungsfläche 5 zu ermitteln, beispielsweise die Dichteverteilung oder die Verteilung von Streukoeffizienten in dieser Ebene, wird die aus dieser Ebene gestreute Strahlung detektiert. Hierzu liegt parallel zur Untersuchungsfläche 5 und ihr gegenüber eine Blendenplatte 6, welche um eine senkrecht durch sie und durch das Zentrum der Untersuchungsfläche 5 verlaufende Achse 7 drehbar angeordnet ist, und die beispielsweise nur eine einzige, ausserhalb der Drehachse 7 liegende Blendenöffnung 8 besitzt. Die durch diese Blendenöffnung 8 hindurchtretende Streustrahlung wird von einem dieser Blendenöffnung zugeordneten Detektor 9 aufgefangen, der mit der Blendenplatte 6 mechanisch verbunden ist und an ihrer Bewegung teilnimmt. Der Detektor 9, dessen Eingangsfläche parallel zur Blendenplatte 6 liegt, ist ebenfalls um eine senkrecht zu seiner Eingangsfläche und durch ihr Zentrum verlaufende Detektorachse 10 drehbar angeordnet. Der Schnittpunkt der Detektorachse 10 mit der Eingangsfläche ergibt sich dabei als Schnittpunkt dieser Fläche mit einer Geraden 11, die durch die Blendenöffnung 8 und durch den Schnittpunkt der Drehachse 7 mit der Untersuchungsfläche 5 verläuft. Die Bewegungen der Blendenplatte 6 und des Detektors 9 sind dabei so aufeinander abgestimmt, dass bei Drehung des Systems Blendenplatte 6 – Detektor 9 um die Drehachse 7 der Detektor 9 gleichzeitig um die Detektorachse 10 in einer zur Drehrichtung der Blendenplatte 6 entgegengesetzten Richtung und mit gleicher Winkelgeschwindigkeit wie die Blendenplatte 6 gedreht wird. Dabei werden die in jeweils unterschiedlichen Stellungen der Blendenöffnung 8 relativ zur Untersuchungsfläche 5 aufgenommenen Streustrahlenbilder nacheinander auf den Detektor 9, z.B. einen Röntgenfilm, deckungsgleich aufbelichtet. Die Bezugsziffern 8', 9' und 10' bezeichnen das System Detektorplatte 6 – Detektor 9 in einer gegenüber der Ausgangsstellung um 180° verdrehten Stellung.

Durch die Drehung des Systems Blendenplatte 6 – Detektor 9 wird erreicht, dass die Bildfehler in den jeweiligen Streustrahlenbildern, die dadurch zustandekommen, dass die von unterschiedlichen Punkten 12, 13 in der Untersuchungsfläche 5 ausgesandte Streustrahlung unterschiedlich lange Wege durch der Körper 4 zurücklegen muss und dadurch unterschiedlich stark geschwächt wird, vermindert werden. Bei der Drehung bleibt natürlich die Zuordnung der jeweiligen Bildpunkte 12', 13' bzw. 12'', 13'' zu ihren Ursprungspunkten 12, 13 erhalten. Es ändert sich aber der Aufnahmewinkel und damit jeweils der Weg der von einem Körperpunkt in der Untersuchungsfläche 5 ausgehenden Streustrahlung durch den Körper. Bei einer Integration der Bildintensität, wie dies automatisch bei Verwendung von Röntgenfilmen erfolgt, werden daher die störenden Schwächungskontraste im Überlagerungsbild verwischt.

Durch die erfindungsgemässe Vorrichtung wird weiterhin erreicht, dass Streustrahlung, die von Punkten 14 kommt, die ausserhalb der Untersuchungsfläche 5 liegen, und die durch Mehrfach-Streustrahlung erzeugt wird, zusätzlich im Überlagerungsbild verwischt wird, wie dies anhand der Bildpunkte 14', 14'' gezeigt ist. Dadurch wird vermieden, dass u.U. Strukturen aus Schichten, die der direkt bestrahlten Untersuchungsfläche 5 benachbart sind, durch Mehrfach-Streuprozesse mit in das Überlagerungsbild übertragen werden.

Die Blendenplatte 6 kann ferner auch mehrere Blendenöffnungen 8 aufweisen, deren zugeordnete Detektoren 9 den gleichen Abstand von der Blendenplatte 6 besitzen. Die von den unterschiedlichen Detektoren 9 aufgenommenen Streustrahlungsbilder werden dann deckungsgleich überlagert. Gegenüber einer Vorrichtung mit nur einem Detektor, bei der das System Blendenplatte 6 – Detektor 9 beispielsweise um 360° gedreht wird, könnte dann der Drehwinkel vermindert sein. Vorzugsweise sind die Blendenöffnungen 8 bzw. die Detektoren 9 konzentrisch zur Drehachse 7 der Blendenplatte 6 angeordnet.

Die deckungsgleiche Überlagerung der Streustrahlenbilder der unterschiedlichen Detektoren 9 kann auch hier auf elektronischem Wege erfolgen, wenn als Detektoren z.B. Bildverstärker kombiniert mit Kameras eingesetzt werden, die z.B. die einfallende Bildintensität auf ihrem Target integrieren können (Speicherkameras) oder die mit einer nachgeschalteten Bildintegriereinrichtung (z.B. Echtzeitvideodigitalisierer mit Summationsspeicher) ausgestattet sind. Bei Verwendung von Röntgenfilmen als Detektoren 9 könnten diese natürlich auch optisch überlagert oder ebenfalls nach Abtastung mittels eines elektronischen Bildaufnehmers auf elektronischem Wege überlagert werden.

Um Fehler in den Überlagerungsbildern zu vermeiden, die aufgrund der Schwächung der Primärstrahlung beim Durchlaufen des Körpers 4 auftreten, können mehrere Primärstrahlenquellen 1 zur Durchstrahlung der Untersuchungsfläche 5 des Körpers 4 vorgesehen sein. Dazu werden die Primärstrahlenquellen 1, z.B. Röntgen- oder Gammastrahlenquellen, auf einem Kreis um den Körper 4 herum angeordnet und ihre Strahlung derart fächerförmig ausgeblendet, dass sie nur in der Untersuchungsfläche 5 verläuft. Weiterhin können die Primärstrahlenquellen 1 in der Ebene der Strahlenfächer 3 auf einem Kreis um den Körper 4 herum drehbar angeordnet sein, so dass während der Aufnahme der Streustrahlungsbilder die Position der Primärstrahlenquellen verändert werden kann und dadurch Kontrastunterschiede im Überlagerungsbild aufgrund der Schwächung der Primärstrahlung weiter vermindert werden. Zu diesem Zweck kann beispielsweise auch eine Gammastrahlenquelle aus einem den Körper 4 vollständig umgebenen Ring aus Isotopenmaterial bestehen.

**Patentansprüche**

1. Vorrichtung zur Abbildung von Streustrahlung aussendenden Streustrahlungsquellen eines mittels einer Primärstrahlung bestrahlten Körpers (4), mit einer ausserhalb der Primärstrahlung liegenden Blendenplatte (6), welche um eine senkrecht durch ihre Plattenebene verlaufende Achse (7) drehbar ist und wenigstens eine ausserhalb der Drehachse liegende Blendenöffnung (8) besitzt, und mit wenigstens einem Detektor (9) bzw. einer Überlagerungseinrichtung zur Messung bzw. Überlagerung der bei unterschiedlichen Blendenöffnungspositionen durch die Blendenplatte hindurchtretenden Streustrahlung, dadurch gekennzeichnet, dass die Primärstrahlung (3) zu einem ebenen Strahlenfächer ausgeblendet ist und die Blendenplatte (6) parallel zum Strahlenfächer liegt, dass jeweils einer Blendenöffnung (8) ein Detektor (9) zugeordnet ist, der an der Drehung der Blendenplatte teilnimmt, und dass der mit seiner Eingangsfläche parallel zur Blendenplatte (6) liegende Detektor (9) um eine senkrecht zu seiner Eingangsfläche und durch ihr Zentrum verlaufende Detektorachse (10) entgegen der Drehrichtung der Blendenplatte und mit gleicher Winkelgeschwindigkeit wie diese drehbar angeordnet ist.

2. Vorrichtung nach Anspruch 1, dadurch gekennzeichnet, dass die Blendenplatte (6) mehrere Blendenöffnungen (8) aufweist, deren zugeordnete Detektoren (9) den gleichen Abstand von der Blendenplatte besitzen, und dass die von den unterschiedlichen Detektoren aufgenommenen Bilder der Streustrahlungsquellen der durch den Strahlenfächer definierten ebenen Untersuchungsfläche (5) im bestrahlten Körper (4) deckungsgleich überlagert werden.

3. Vorrichtung nach Anspruch 2, dadurch gekennzeichnet, dass die Blendenöffnungen (8) auf einem Kreis um die Drehachse (7) der Blendenplatte (6) liegen.

4. Vorrichtung nach Anspruch 1, 2 oder 3, dadurch gekennzeichnet, dass die Detektoren (9) elektronische Bildaufnehmer sind und die Überlagerung der Bilder der Untersuchungsfläche (5) auf elektronischem Wege erfolgt.

5. Vorrichtung nach Anspruch 1, 2 oder 3, dadurch gekennzeichnet, dass die Detektoren (9) strahlungsempfindliche Filme sind und die Überlagerung der Bilder der Untersuchungsfläche (5) auf optischem oder elektronischem Wege erfolgt.

6. Vorrichtung nach einem oder mehreren der Ansprüche 1 bis 5, dadurch gekennzeichnet, dass eine oder mehrere Primärstrahlenquellen (1) zur Durchstrahlung der Untersuchungsfläche (5) des Körpers (4) vorgesehen sind.

7. Vorrichtung nach Anspruch 6, dadurch gekennzeichnet, dass die Primärstrahlenquellen (1) auf einem Kreis um den Körper (4) herum angeordnet sind.

8. Vorrichtung nach Anspruch 6 oder 7, dadurch gekennzeichnet, dass die Primärstrahlenquellen (1) in der Ebene der Strahlenfächer auf einem Kreis um den Körper (4) herum drehbar angeordnet sind.

9. Vorrichtung nach einem oder mehreren der Ansprüche 1 bis 8, dadurch gekennzeichnet, dass die Primärstrahlenquellen (1) Röntgen- oder Gammastrahlenquellen sind.

10. Vorrichtung nach Anspruch 9, dadurch gekennzeichnet, dass die Gammastrahlenquelle aus einem den Körper (4) vollständig umgebenden Ring aus Isotopenmaterial besteht.

## Claims

1. An apparatus for imaging scattered radiation sources of a body (4) irradiated by primary radiation, which sources emit scattered radiation, which apparatus comprises a diaphragm plate (6) which is arranged outside the primary radiation, is rotatable about an axis (7) perpendicular to the plane of the plate, and has at least one aperture (8) situated off the axis of rotation, the apparatus furthermore comprising at least one detector (9) or a superposition device for measuring or superimposing the scattered radiation which passes through the diaphragm plate at different aperture settings, characterized in that the primary radiation (3) is stopped down to form a flat fan-shaped beam, the diaphragm plate (6) extending parallel to the fan-shaped beam, in that for each aperture (8) there is provided an associated detector (9) which follows the rotation of the aperture plate, and in that the detector (9) whose input face extends parallel to the diaphragm plate (6) is arranged so as to be rotatable about a detector axis (10) which extends perpendicularly to its input face and through its centre in a direction opposite to the direction of rotation of the diaphragm plate and with the same angular velocity as this plate.

2. An apparatus as claimed in Claim 1, characterized in that the diaphragm plate (6) has a plurality of apertures (8) whose associated detectors (9) are situated at equal distances from the diaphragm plate, and in that the images of the scattered radiation sources of the flat layer (5) to be examined, defined in the irradiated body (4) by the fan-shaped beam, which are recorded by the various detectors are superimposed so as to be in register.

3. An apparatus as claimed in Claim 2, characterized in that the apertures (8) are on a circle about the axis of rotation (7) of the diaphragm plate (6).

4. An apparatus as claimed in Claim 1, 2 or 3, characterized in that the detectors (9) are electronic image transducers and the images of the layer (5) to be examined are superimposed electronically.

5. An apparatus as claimed in Claim 1, 2 or 3, characterized in that the detectors (9) are radiation-sensitive films and the images of the layer (5) to be examined are superimposed optically or electronically.

6. An apparatus as claimed in one or more of the Claims 1 to 5, characterized in that one or more primary radiation sources (1) are provided for irradiating the layer (5) of the body (4) to be examined.

7. An apparatus as claimed in Claim 6, characterized in that the primary radiation sources (1) are arranged on a circle around the body (4).

8. An apparatus as claimed in Claim 6 or 7, characterized in that the primary radiation sources (1) are arranged on a circle so as to be rotatable around the body (4) in the plane of the fan-shaped beams.

9. An apparatus as claimed in one or more of the Claims 1 to 8, characterized in that the primary radiation sources (1) are X-ray or gamma-ray sources.

10. An apparatus as claimed in Claim 9, characterized in that the gamma-ray source consists of a ring of an isotropic material which completely surrounds the body (4).

## Revendications

1. Dispositif pour visualiser des sources de rayonnement diffusé émettant un rayonnement diffusé d'un corps (4) exposé à un rayonnement primaire, comportant une plaque-diaphragme (6) disposée en dehors du rayonnement primaire, qui peut tourner autour d'un axe (7) traversant son plan à angle droit et présente au moins un orifice de diaphragme (8) situé à l'extérieur de l'axe de rotation, et au moins un détecteur (9) ou un dispositif de superposition pour mesurer ou superposer le rayonnement diffusé traversant la plaque-diaphragme pour diverses positions de l'orifice de diaphragme, caractérisé en ce que le rayonnement primaire (3) est diaphragmé en un faisceau plat en éventail et la plaque-diaphragme (6) est parallèle au faisceau de rayons en éventail, qu'un détecteur (9) qui participe à la rotation de la plaque-diaphragme est chaque fois associé à une ouverture de diaphragme (8) et que le détecteur (9), dont la surface d'entrée est parallèle à la plaque-diaphragme (6), est monté à rotation autour d'un axe de détecteur (10) perpendiculaire à sa surface d'entrée et passant par son centre, dans un sens opposé au sens de rotation de la plaque-diaphragme et à la même vitesse angulaire que celle-ci.

2. Dispositif suivant la revendication 1, caractérisé en ce que la plaque-diaphragme (6) comporte plusieurs ouvertures de diaphragme (8) dont les détecteurs (9) associés sont disposés à la même distance de la plaque-diaphragme et que les images captées par les divers détecteurs des sources de rayons diffusés de la surface d'examen plane (5) dans le corps (4) exposé au rayonnement défini par des faisceaux de rayons sont superposées en coïncidence.

3. Dispositif suivant la revendication 2, caractérisé en ce que les ouvertures de diaphragme (8) sont disposées sur un cercle centré autour de l'axe de rotation (7) de la plaque-diaphragme (6).

4. Dispositif suivant la revendication 1, 2 ou 3, caractérisé en ce que les détecteurs (9) sont des capteurs d'images électroniques et la superposition des images de la surface d'examen (5) s'effectue par voie électronique.

5. Dispositif suivant la revendication 1, 2 ou 3, caractérisé en ce que les détecteurs (9) sont des films sensibles au rayonnement et la superposition des images de la surface d'examen (5) s'effectue par voie optique ou électronique.

6. Dispositif suivant l'une quelconque des revendications 1 à 5, caractérisé en ce qu'une ou plusieurs sources de rayonnement primaire (1) sont prévues pour exposer la surface d'examen (5) du corps (4) au rayonnement.

7. Dispositif suivant la revendication 6, caractérisé en ce que les sources de rayonnement primaire (1) sont disposées sur un cercle autour du corps (4).

8. Dispositif suivant la revendication 6 ou 7, caractérisé en ce que les sources de rayonnement primaire (1) sont montées à rotation dans le plan des éventails de rayons sur un cercle autour du corps (4).

9. Dispositif suivant l'une quelconque des revendications 1 à 8, caractérisé en ce que les sources de rayonnement primaire (1) sont des sources de rayons X ou gamma.

10. Dispositif suivant la revendication 9, caractérisé en ce que la source de rayons gamma est faite d'une couronne de matière isotopique entourant complètement le corps (4).